# EUROPÄISCHE PATENTSCHRIFT

(11) **EP 2 887 115 B1**
(45) Veröffentlichungstag und Bekanntmachung des Hinweises auf die Patenterteilung: **09.10.2024**
(21) Anmeldenummer: 14004190.6
(22) Anmeldetag: 12.12.2014
(51) Int. Cl.: G02B 19/00, G02B 3/00, G02B 5/04

(54) **LEUCHTE**
Lamp
Éclairage

(30) Priorität: 18.12.2013 DE 102013021053
(43) Veröffentlichungstag der Anmeldung: 24.06.2015
(60) Teilanmeldung: 24192159.2
(73) Patentinhaber: ERCO GmbH, 58507 Lüdenscheid (DE)
(72) Erfinder: Bremerich, Matthias, 57368 Lennestadt (DE)
(74) Vertreter: Roche, von Westernhagen & Ehresmann

(56) Entgegenhaltungen:
- WO-A1-2009/078439
- WO-A1-2010/010494
- DE-A1- 102009 060 566
- DE-A1- 102010 008 359
- US-A- 5 949 933
- US-A1- 2008 007 966
- US-A1- 2010 165 623

## Beschreibung

Die Erfindung bezieht sich auf eine Kombination einer Gebäudefläche mit einer Leuchte nach Anspruch 1.

Die Anmelderin entwickelt und vertreibt seit vielen Jahrzehnten Leuchten unterschiedlicher Art.

In bestimmten Anwendungsfällen ist es gewünscht, eine Leuchte bereitzustellen, die unmittelbar benachbart einer auszuleuchtenden Gebäudefläche angeordnet werden kann, und die in der Lage ist, auch sehr große Gebäudeflächen, insbesondere sehr hohe Wände, homogen auszuleuchten.

Aus der WO 2010/010494 A1 ist eine Straßenleuchte bekannt, die der Ausleuchtung einer Bodenfläche dient. Der Druckschrift ist nicht zu entnehmen, dass die Leute deckenseitig oder bodenseitig zwecks Ausleuchtung einer hohen, vertikalen Wand eines Gebäuderaumes eingesetzt werden könnte. Die dort beschriebene Leuchte ist nicht entlang einer Längsrichtung langgestreckt ausgebildet, und sie weist nicht mehrere Kollimatoroptiken auf, die entlang der Längsrichtung in Reihe angeordnet sind. Auch zeigt die Leuchte dieser Druckschrift keine Lichtablenkungsmittel, die von sich in Längsrichtung erstreckenden Prismen bereitgestellt sind, und auch keine Verbreiterungsmittel, die von Lentikularlinsen gebildet sind, die sich entlang einer Richtung quer zu der Längsrichtung der Leuchte erstrecken. Schließlich zeigt die Druckschrift keine Leuchte, bei der Licht von jeweils einer Kollimatoroptik entlang einer Hauptachse mit einer entlang einer ersten, die Längsrichtung beinhaltenden Ebene, und entlang einer zweiten Ebene, deren Normalenvektor von der Längsrichtung bereitgestellt ist, jeweils sehr engen Lichtverteilung einer Tertiäroptik zugeführt wird, wobei die Tertiäroptik Verbreiterungsmittel aufweist, mittels der eine Verbreiterung der Lichtverteilung entlang der ersten Ebene erfolgt, und Lichtablenkungsmittel, mittels der unter Beibehaltung einer engen oder im wesentlichen engen Lichtverteilung entlang der zweiten Ebene überwiegende Anteile des gesamten Lichtstromes in einen von der ersten Ebene begrenzten Halbraum gelenkt werden.

Aus der US 2010/165623 A1, der US 2008/007966 A1, der US 5 949 933 A, der WO 2009/078439 A1, der DE 10 2009 060566 A1 und der DE 10 2010 008359 A1 geht keine Kombination einer Gebäudefläche mit einer Leuchte hervor, die die Merkmale des Anspruches 1 aufweist.

DE 10 2009 060 566 A1 offenbart eine Leuchte zur Ausleuchtung einer Gebäudefläche, umfassend eine Mehrzahl von auf einem Substrat angeordneten LED's mit einer Kollimatoroptik, und umfassend eine Tertiäroptik in Form eines transluzenten, insbesondere flächenhaft ausgebildeten Elementes, dadurch gekennzeichnet, dass die Tertiäroptik mehrere Bereiche mit unterschiedlichen Transmissionseiqenschaften aufweist, und dass die Tertiäroptik relativ zu dem Substrat verlagerbar angeordnet ist, wobei mit der in einer ersten Position befindlichen Tertiäroptik eine erste Lichtverteilung und mit der in einer zweiten Position befindlichen Tertiäroptik eine zweite Lichtverteilung generierbar ist.

Der Erfindung liegt die Aufgabe zugrunde, eine Leuchte bereitzustellen, die unmittelbar benachbart einer auszuleuchtenden Gebäudefläche angeordnet werden kann, und die in der Lage ist, auch sehr große Gebäudeflächen, insbesondere sehr hohe Wände, homogen auszuleuchten.

Die Erfindung löst die Aufgabe mit den Merkmalen des Anspruches 1.

Die Erfindung wird nachfolgend erläutert.

Die Erfindung betrifft eine Leuchte zur Ausleuchtung einer Gebäudefläche. Als Gebäudefläche wird jede Innen- oder Außenraumfläche eines Gebäudes, insbesondere eine vertikale Wandfläche, bezeichnet. Als Gebäudefläche werden in der vorliegenden Patentanmeldung aber auch Gebäudeteilflächen oder auszuleuchtende Objekte, Statuen, Ausstattungsgegenstände oder dergleichen bezeichnet.

Vorzugsweise dient die Leuchte zur deckenseitigen oder bodenseitigen Anbringung, unmittelbar benachbart einer sehr hohen, auszuleuchtenden vertikalen Wand eines Gebäuderaumes. Besonders vorteilhaft ist die Anordnung der erfindungsgemäßen Leuchte in oder an einer deckenseitigen oder bodenseitigen Nische, einer sogenannten Voute, zum Zwecke einer Ausleuchtung sehr hoch ausgebildeter vertikaler Wandflächen, von beispielsweise bis zu 10 Metern Höhe.

Die erfindungsgemäße Leuchte ist in Längsrichtung langgestreckt ausgebildet. Sie ist somit länger ausgebildet, als sie breit oder hoch ist. Es handelt sich mithin um eine lineare Leuchte. Sie ist insbesondere entlang einer Geraden mit einer Vielzahl gleich ausgebildeter Leuchten zu einer Reihenanordnung kombinierbar.

Die Leuchte generiert entlang einer ersten Ebene eine erste Lichtverteilung und entlang einer zweiten Ebene eine zweite Lichtverteilung. Die erste und die zweite Lichtverteilung sind unterschiedlich ausgebildet.

Die erste Ebene beinhaltet die Längsrichtung der Leuchte. Es handelt sich also um eine Ebene, die beispielsweise parallel ausgerichtet ist zu der Ebene der auszuleuchtenden Gebäudefläche. Letzteres setzt natürlich voraus, dass die Gebäudefläche auch eben ausgebildet ist.

Die zweite Ebene steht senkrecht zu der ersten Ebene. Bei der zweiten Ebene handelt es sich um eine solche Ebene, deren Normalenvektor von der Längsrichtung der Leuchte gebildet ist. Der Normalenvektor steht also senkrecht auf die Ebene. Die zweite Ebene stellt - anders ausgedrückt - die Ebene eines Querschnittes durch die Leuchte dar.

Die Leuchte umfasst mehrere LED's als Primäroptik. Die mehreren LED's sind vorzugsweise entlang der Längsrichtung angeordnet, weiter vorzugsweise beabstandet voneinander, weiter vorzugsweise entlang einem regelmäßigen Raster beabstandet voneinander angeordnet.

Den LED's ist jeweils eine Kollimatoroptik als Sekundäroptik zugeordnet. Dabei kann vorgesehen sein, dass entweder jeder einzelnen LED eine eigene Kollimatoroptik zugeordnet ist, oder jeweils einer Gruppe von mehreren LED's, beispielsweise auch einer Gruppe von mehreren farblich unterschiedlichen lichtemittierenden LED's, jeweils eine Kollimatoroptik als Sekundäroptik zugeordnet ist.

Die Leuchte umfasst insoweit auch mehrere Kollimatoroptiken, die beabstandet voneinander, oder auf Stoß aneinander liegend, entlang der Längsrichtung angeordnet sind.

Mithin umfasst die Leuchte in jedem Falle eine Reihe von Kollimatoroptiken entlang der Längsrichtung der Leuchte.

Die Kollimatoroptik bündelt das von der LED oder von den LED's emittierte Licht. Sie führt das Licht der Tertiäroptik entlang einer Hauptachse zu.

Die Lichtzuführung von der Kollimatoroptik zu der Tertiäroptik erfolgt sowohl entlang der ersten Ebene mit einer sehr engen Lichtverteilung, als auch entlang der zweiten Ebene mit einer sehr engen Lichtverteilung. Besonders vorteilhaft ist eine rotationssymmetrische, enge Lichtverteilung.

Als sehr enge Lichtverteilung im Sinne der vorliegenden Patentanmeldung wird eine Lichtverteilung verstanden, die nahezu parallel gerichtetes Licht umfasst, oder Licht eines Öffnungswinkels von weniger als 10°.

Die Tertiäroptik ist vorteilhafterweise beabstandet von der Lichtaustrittsfläche der Sekundäroptik angeordnet. Weiter vorzugsweise weist die Tertiäroptik eine Lichteintrittsfläche und eine Lichtaustrittsfläche auf.

Die Tertiäroptik kann beispielsweise von einem im Wesentlichen plattenförmigen, flachen Element gebildet sein.

Erfindungsgemäß weist die Tertiäroptik Verbreiterungsmittel auf. Die Verbreiterungsmittel sorgen dafür, dass die Lichtverteilung entlang einer ersten Ebene E1 verbreitert wird. Der Lichtabstrahlungswinkel wird also entlang der ersten Ebene E1 durch die Verbreiterungsmittel vergrößert.

Eine solche Lichtverbreiterung kann beispielweise durch Anordnung von Linsenelementen, nämlich sogenannten Zerstreuungslinsen oder Streulinsen, und insbesondere vorzugsweise durch die Anordnung von Lentikular-Linsen erfolgen.

Auch andere Lichtverbreiterungsmittel sind denkbar.

Gemäß der Erfindung umfasst die Tertiäroptik darüber hinaus Lichtablenkungsmittel. Mittels der Lichtablenkungsmittel kann eine Ablenkung überwiegender Anteile des gesamten Lichtstromes der Leuchte in einen Halbraum erfolgen. Der Halbraum, in den hinein die überwiegenden Anteile des gesamten Lichtstromes hinein gelenkt werden, wird von der ersten Ebene E1 begrenzt. Vorteilhafterweise werden mehr als 55% der Anteile des gesamten Lichtstromes, weiter vorteilhafterweise mehr als 60%, weiter vorteilhafterweise mehr als 70%, weiter vorteilhafterweise mehr als 75%, und weiter vorteilhafterweise etwa 80% oder mehr als 80% des gesamten, von der Leuchte emittierten Lichtstroms in diesen einen Halbraum hinein gelenkt.

Die Lichtablenkungsmittel können die Lenkung der Anteile des Lichtstromes in den von der ersten Ebene begrenzten Halbraum dabei unter Beibehaltung der engen, oder der im Wesentlichen engen Lichtverteilung entlang der zweiten Ebene erreichen. Die enge Lichtverteilung entlang der zweiten Ebene ist dabei auf Winkel von weniger als 40°, vorzugsweise weniger als 30°, vorzugsweise weniger als 20°, begrenzt.

Bei einem besonders vorteilhaften Ausführungsbeispiel der Erfindung liegt der Abstrahlwinkel der engen Lichtverteilung entlang der zweiten Ebene E2 etwa zwischen 4° und 10°.

Gemäß der Erfindung kann die erfindungsgemäß ausgebildete Leuchte beispielweise deckenseitig in einer dafür vorgesehenen Ausnehmung, einer Voute, jedenfalls unmittelbar benachbart der auszuleuchtenden Wand angeordnet werden. In Frage kommen beispielsweise Anwendungsfälle, in denen die erfindungsgemäße Leuchte unter einem so geringen Abstand, wie beispielsweise nur 10 cm, von der Wand entfernt, angeordnet wird.

Die Wand kann sich entlang einer beliebigen Länge erstrecken, wobei entsprechend der Länge der Wand auch die Länge der Leuchte gewählt werden kann, bzw. eine Vielzahl von Leuchten in Reihe in Längsrichtung hintereinander angeordnet werden kann, und die Länge der so gebildeten Reihenanordnung von Leuchten der Länge der Wand entsprechen kann.

Die Wand kann eine Höhe aufweisen, die beispielsweise bis zu 10 m beträgt.

Mit der erfindungsgemäßen Leuchte kann bei der beschriebenen geometrischen Anordnung der Leuchte relativ zu der Wand die gesamte Wandfläche gleichmäßig, homogen ausgeleuchtet werden.

Bei einer erfindungsgemäßen Kombination einer Gebäudefläche mit einer Leuchte kann vorgesehen sein, dass mehrere Kollimatoroptiken einander unmittelbar benachbart, unter Bereitstellung einer Reihenanordnung, entlang der Längsrichtung angeordnet sind. Die unmittelbare Benachbarung von Kollimatoroptiken kann zum Beispiel umfassen, dass die Kollimatoroptiken sozusagen nahe, auf Stoß aneinander liegend, zu einer Reihenanordnung zusammengefasst sind.

Eine erfindungsgemäße Kombination einer Gebäudefläche mit einer Leuchte nach Anspruch 1 erlaubt auch eine Beabstandung von Kollimatoroptiken voneinander in Längsrichtung.

Gemäß einer vorteilhaften Ausgestaltung der Erfindung dienen die Lichtablenkungsmittel einer Lichtvergleichmäßigung im Sinne einer Homogenisierung der Lichtverteilung entlang eines Lichtabstrahlungswinkels entlang der zweiten Ebene.

Die Lichtablenkungsmittel sind in Form von Prismen unmittelbar auf der Tertiäroptik, beispielsweise auf der Lichtaustrittsfläche der Tertiäroptik, angeordnet. Die Anordnung der einzelnen Prismenflächen, d. h. deren Positionierung und deren Ausbildung, kann vorteilhaft so berechnet werden, dass eine sehr gleichmäßige Ablenkung des Lichtstromes entlang des Lichtabstrahlwinkels entlang der zweiten Ebene E2 erfolgt. Dies ermöglicht eine homogene Ausleuchtung der gesamten auszuleuchtenden Gebäudefläche zwischen einem der Leuchte sehr nah positionierten Abschnitt der Gebäudefläche bis hin zu einem von der Leuchte maximal entfernten Abschnitt der Gebäudefläche. Die Prismen können dabei hinsichtlich ihres Anstellwinkels, hinsichtlich ihrer Höhe und hinsichtlich ihrer axialen Länge und ihrer Breite unterschiedlich ausgebildet und positioniert sein.

Unter Zuhilfenahme von Simulationssoftware kann die optimale Lichtvergleichmäßigung und die dafür erforderliche Ausbildung der Prismen optimiert werden.

Gemäß einer vorteilhaften Ausgestaltung der Erfindung trifft das Licht von der Sekundäroptik im Wesentlichen als paralleles Lichtstrahlenbündel auf die Tertiäroptik. Die Sekundäroptik ist vorteilhafterweise derartig eng strahlend ausgebildet, dass ein paralleles oder ein nahezu paralleles Lichtstrahlenbündel generiert wird.

Als Sekundäroptik im Sinne der vorliegenden Patentanmeldung kommen insbesondere Optiken in Betracht, wie sie in der deutschen Patentanmeldung DE 10 2009 053 422 A1 der Anmelderin beschrieben sind.

Der Offenbarungsgehalt der in Bezug genommenen Patentanmeldung wird hiermit, auch zum Zwecke der Bezugnahme auf einzelne Merkmale, und zur Vermeidung von Wiederholungen, in den Inhalt der vorliegenden Patentanmeldung mit eingeschlossen.

Gemäß einer vorteilhaften Ausgestaltung der Erfindung ist eine Lichteintrittsfläche der Tertiäroptik von einer Lichtaustrittsfläche der Sekundäroptik beabstandet angeordnet. Die Beabstandung kann zwischen 1 mm und 50 mm betragen. Vorzugsweise beträgt der Abstand etwa zwischen 3 mm und 20 mm.

Gemäß einer weiteren vorteilhaften Ausgestaltung der Erfindung emittiert die Sekundäroptik eine um ihre Mittelachse im Wesentlichen rotationssymmetrisch ausgebildete Lichtverteilung. Hierdurch wird einerseits ein Rückgriff auf herkömmliche, bekannte Kollimatoroptiken möglich. Zum anderen wird hiermit eine Konstruktion bereitgestellt, die eine sehr zielgerichtete Weiterbearbeitung des Lichtstromes und die Anordnung dafür vorgesehener lichttechnischer Elemente innerhalb der Leuchte ermöglicht.

Gemäß einer weiteren vorteilhaften Ausgestaltung der Erfindung sind die Verbreiterungsmittel an der einen Seite der Tertiäroptik und die Lichtablenkungsmittel an der anderen Seite der Tertiäroptik angeordnet. Insbesondere sind die Verbreiterungsmittel an der Lichteintrittsfläche der Tertiäroptik und die Lichtlenkungsmittel an der Austrittsseite der Tertiäroptik angeordnet. Dies ermöglicht eine einfache Konstruktion einer Tertiäroptik zur Verwendung in einer erfindungsgemäßen Leuchte und ihre einfache Herstellung.

Gemäß einer weiteren vorteilhaften Ausgestaltung der Erfindung ist die Tertiäroptik von einem flächigen, insbesondere flachen, weiter insbesondere von einem plattenförmigen Element, gebildet. Diese Ausgestaltung der Erfindung ermöglicht eine einfache Konstruktion und Fertigung einer erfindungsgemäßen Leuchte.

Gemäß einer weiteren vorteilhaften Ausgestaltung der Erfindung sind die Lichtverbreiterungsmittel und die Lichtablenkungsmittel als Mikrostrukturen einer Lichteintrittsfläche oder alternativ einer Lichtaustrittsfläche desselben Elementes ausgebildet. Bei dieser alternativen Ausgestaltung der Erfindung sind die Verbreiterungsmittel und die Lichtablenkungsmittel sozusagen einander überlagert. Durch entsprechende Simulationen können Freieformflächen, beispielsweise tropfenförmiger Art, simuliert, und konstruiert werden. Lichttechnisch kann damit der gleiche Effekt erreicht werden, der erreicht wird, wenn Verbreiterungsmittel an der Lichteintrittsfläche der Tertiäroptik und Lichtlenkungsmittel an der Lichtaustrittsfläche der Tertiäroptik angeordnet sind.

Bei einer weiteren alternativen Ausgestaltung der Erfindung ist die Tertiäroptik von zwei oder mehreren Elementen gebildet, insbesondere von zwei oder mehreren flächigen, insbesondere flachen, weiter insbesondere plattenförmigen Elementen gebildet. Hier können die Verbreiterungsmittel und die Lichtablenkungsmittel als Mikrostrukturen an den unterschiedlichen Elementen ausgebildet sein. Hierdurch wird eine weiter vereinfachte Konstruktion und Fertigung der Tertiäroptik möglich. Allerdings ist eine solche Ausführungsform der Erfindung nicht so effizient, wie die bevorzugte Ausführungsform der Erfindung, bei der Lichtverbreiterungsmittel auf der einen Seite der Tertiäroptik und Lichtlenkungsmittel auf der anderen Seite derselben Tertiäroptik angeordnet sind.

Gemäß der Erfindung sind die Verbreiterungsmittel von Lentikularlinsen gebildet. Diese erstrecken sich jeweils entlang einer Richtung quer zu der Längsrichtung der Leuchte. Als Lentikularlinsen werden insbesondere langgestreckte, linsenförmige Elemente als Bestandteil der Oberfläche der Tertiäroptik verstanden, die von einer Teilfläche eines Kreiszylinders bereitgestellt sind.

Ein auf eine Tertiäroptik mit als Lentikularlinsen ausgebildeten Verbreiterungsmitteln betreffendes paralleles Lichtstrahlenbündel wird um einen vorgegebenen Betrag, d. h. auf einen bestimmten Lichtabstrahlwinkel hin, aufgespreizt.

Vorzugsweise erfolgt eine Lichtverbreiterung entlang der Ebene E1 auf einen Lichtabstrahlwinkel von weniger als 100°, weiter insbesondere von weniger als 90° und weiter insbesondere von weniger als 80°. Zugleich erfolgt unter Zuhilfenahme der Verbreiterungsmittel eine Lichtverbreiterung entlang der Ebene E1 auf einen Lichtabstrahlwinkel von mehr als 20°, insbesondere mehr als 30°, insbesondere mehr als 50°.

Gemäß der Erfindung sind die Lichtablenkungsmittel von einer Vielzahl von Prismen gebildet. Die Prismen variieren insbesondere in ihrem Anstellwinkel, in ihrer Breite, in ihrer axialen Länge und in ihrer Höhe.

Als Abstrahlwinkel bzw. als Winkelangabe einer Lichtverteilung im Sinne der vorliegenden Erfindung wird insbesondere derjenige Winkel bezeichnet, der im fachmännischen Sinne als Öffnungswinkel bezeichnet wird, und den "full width half max"-Wert darstellt. Es handelt sich also um denjenigen Wert des Lichtabstrahlwinkels, bei dem die Lichtintensität etwa auf die Hälfte der maximalen Lichtintensität gefallen ist.

Weitere Vorteile der Erfindung ergeben sich anhand der nachfolgenden Beschreibung der in den Zeichnungen dargestellten Ausführungsbeispiele, sowie anhand der nicht zitierten Unteransprüche.

In den Zeichnungen zeigen:
- Fig. 1: in einer teilgeschnittenen schematischen Ansicht einen Gebäuderaum mit einer abgehängten Zwischendecke und einer sogenannten Voute, in der eine Leuchte der erfindungsgemäßen Art zum Zwecke der Ausleuchtung der vertikal ausgerichteten Wandfläche angeordnet ist,
- Fig. 2: ein erstes Ausführungsbeispiel einer erfindungsgemäßen Leuchte in einer teilgeschnittenen, schematischen Unteransicht,
- Fig. 3: einen schematischen Querschnitt durch einen Teilbereich der Leuchte der Fig. 2, etwa entlang Schnittlinie III-III in Fig. 2, unter Weglassung wesentlicher Elemente der Leuchte, und unter Veranschaulichung des Lichtstrahlenverlaufes und der Lichtverteilung entlang der Ebene E2,
- Fig. 4: eine schematische Schnittdarstellung durch die Leuchte der Fig. 2 in einer Darstellung ähnlich der Fig. 3, unter Veranschaulichung des Lichtstrahlenverlaufes entlang der Ebene E1, etwa entlang Schnittlinie IV-IV in Fig. 2,
- Fig. 5: eine perspektivische Ansicht der Sekundäroptik und der Tertiäroptik der Leuchte der Fig. 3, etwa entlang Ansichtspfeil V in Fig. 3, unter Weglassung wesentlicher Elemente und unter schematischer Darstellung eines Lichtstrahlenverlaufes entlang einer Mittelebene,
- Fig. 6: eine Rückansicht der Leuchte der Fig. 5, etwa entlang Ansichtspfeil VI in Fig. 5,
- Fig. 7: eine Darstellung der Leuchte gemäß Fig. 3 unter Veranschaulichung einer größeren Strecke des Lichtweges und unter Veranschaulichung der beiden Halbräume,
- Fig. 8: eine Detaildarstellung der Tertiäroptik etwa entlang Teilkreis VIII in Fig. 7,
- Fig. 9: ein weiteres Ausführungsbeispiel einer erfindungsgemäßen Leuchte, in einer Darstellung gemäß Fig. 3, wobei die Tertiäroptik von zwei gesonderten, plattenförmigen Elementen bereitgestellt ist,
- Fig. 10: das Ausführungsbeispiel der Leuchte gemäß Fig. 9, etwa entlang der Schnittlinie X-X in Fig. 9, in einer Darstellung gemäß Fig. 4,
- Fig. 11: ein weiteres Ausführungsbeispiel einer erfindungsgemäßen Leuchte mit einer Reihenanordnung von Kollimatoroptiken, die einander unmittelbar benachbart, auf Stoß aneinanderliegend, entlang der Längsrichtung angeordnet sind, in einer Darstellung vergleichbar der Darstellung der Figur 2,
- Fig. 12: eine schematische Schnittdarstellung durch die Leuchte der Fig. 11, etwa entlang Schnittlinie XII-XII, und
- Fig. 13: die Leuchte der Fig. 11 in einer sehr schematischen Schnittdarstellung, etwa entlang Schnittlinie XIII-XIII in Fig. 11.

Ausführungsbeispiele der Erfindung werden anhand der nachfolgenden Zeichnungen detailliert erläutert. Der nachfolgenden Beschreibung sei vorausgeschickt, dass der Übersichtlichkeit halber gleiche oder miteinander vergleichbare Teile oder Elemente, auch soweit unterschiedliche Ausführungsbeispiele betroffen sind, mit gleichen Bezugszeichen, teilweise unter Hinzufügung kleiner Buchstaben, bezeichnet sind.

Weiter sei darauf hingewiesen, dass die Merkmale in der Figurenbeschreibung, die nur bei einem Ausführungsbeispiel beschrieben sind, gleichermaßen auch bei einem anderen Ausführungsbeispiel vorgesehen sein können, selbst wenn dieses in den Figuren nicht dargestellt ist. Auch solche, nicht dargestellten Ausführungsbeispiele sind von der Erfindung mit umfasst.

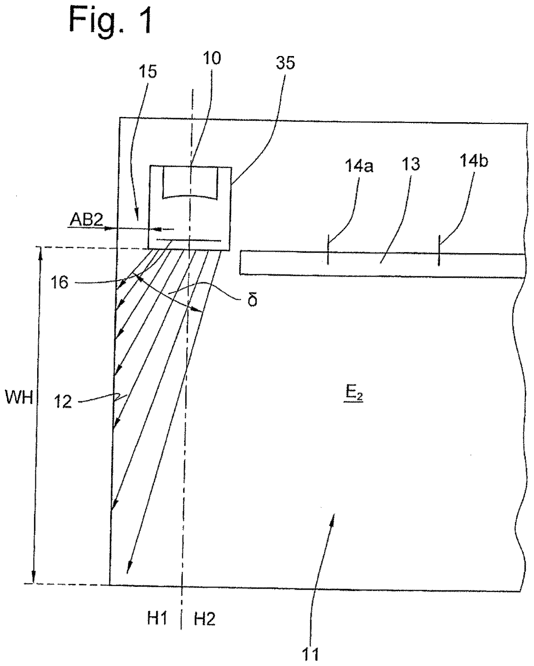

Fig. 1 veranschaulicht zunächst die Position einer erfindungsgemäßen, in ihrer Gesamtheit mit 10 bezeichneten Leuchte. Diese ist zur Ausleuchtung einer Gebäudefläche 12 eines Gebäuderaumes 11 vorgesehen.

Der Gebäuderaum 11 weist eine abgehängte Decke 13 auf, die mittels lediglich schematisch angedeuteter Halterungselemente 14a, 14b festgelegt ist. Die abgehängte Decke 13 wird auch als Zwischendecke, Gipskartondecke, Deckenkonstruktion oder dergleichen bezeichnet.

Die auszuleuchtende Gebäudefläche 12 ist eine vertikale Gebäudewand. Diese kann eine sehr große Höhe WH von beispielsweise bis zu 10 Metern aufweisen.

Unmittelbar benachbart der auszuleuchtenden Gebäudefläche 12 ist in der abgehängten Decke 13 eine Lücke 15 angeordnet. Dieser Freiraum wird fachmännisch als Voute bezeichnet.

In dieser Voute wird die erfindungsgemäße Leuchte 10 angeordnet. Der Abstand AB2 zwischen der Leuchte 10 und der Gebäudefläche 12 kann dabei beispielweise nur wenige Zentimeter, beispielsweise nur 10 cm betragen.

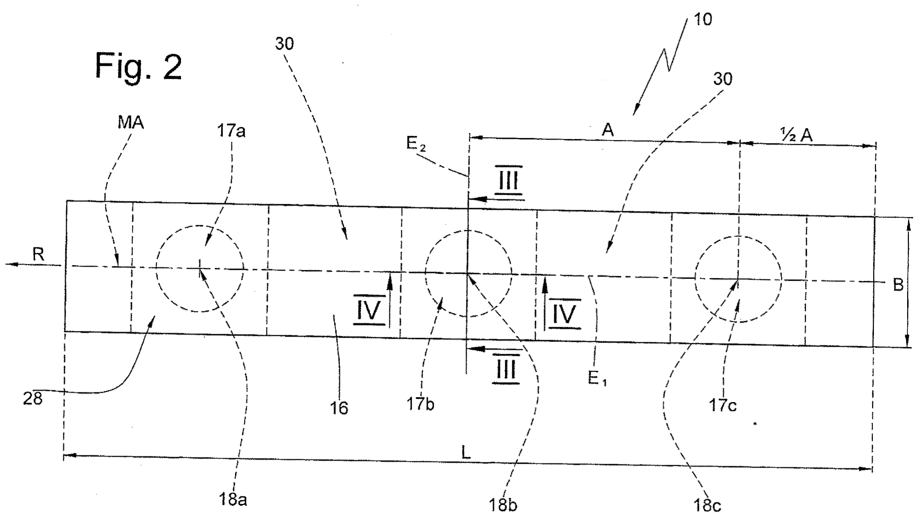

Ausweislich Fig. 2 ist ein Ausführungsbeispiel der erfindungsgemäßen Leuchte in Unteransicht dargestellt. Erkennbar ist, dass die Leuchte 10 eine Breite B und eine Länge L aufweist. Die Leuchte ist also in Längsrichtung R langgestreckt ausgebildet.

Das Ausführungsbeispiel der Leuchte 10 gemäß Fig. 2 weist eine Lichtaustrittsöffnung 28 auf, die im Wesentlichen rechteckig ausgebildet ist, und etwa die Maße Breite B x Länge L aufweist.

Mehrere der erfindungsgemäßen Leuchten 10 können in Längsrichtung R nebeneinander angeordnet werden, insbesondere auch auf Stoß, um so eine Leuchtenkonstruktion auszubilden, mit einer Gesamtlänge, die der Gesamtlänge oder eines Großteils der Gesamtlänge der auszuleuchtenden Gebäudefläche 12 entspricht.

Die Voute 15 erstreckt sich dabei ebenfalls vorzugsweise entlang der gesamten Länge oder entlang eines Großteils der Länge der Wand 12.

Zunächst soll ausweislich des Ausführungsbeispiels der Figuren 2 bis 8 ein erster Leuchtentyp beschrieben werden.

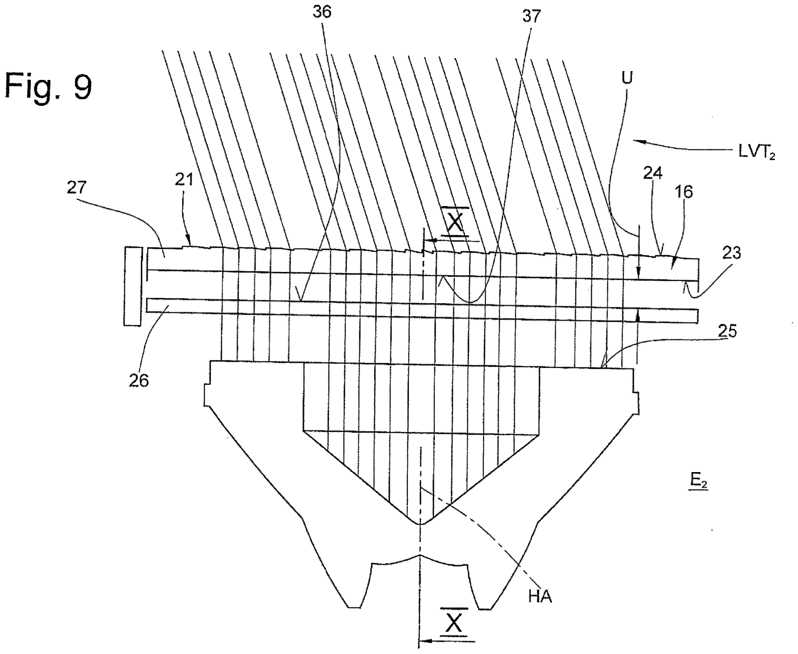

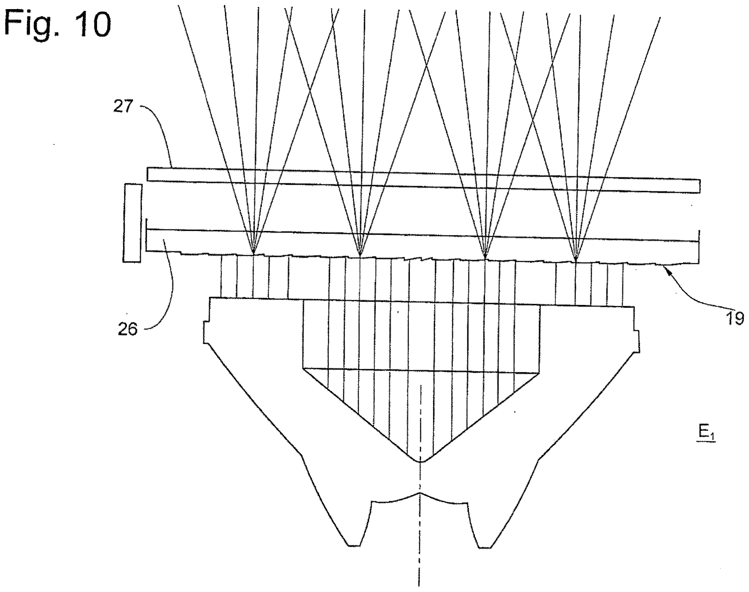

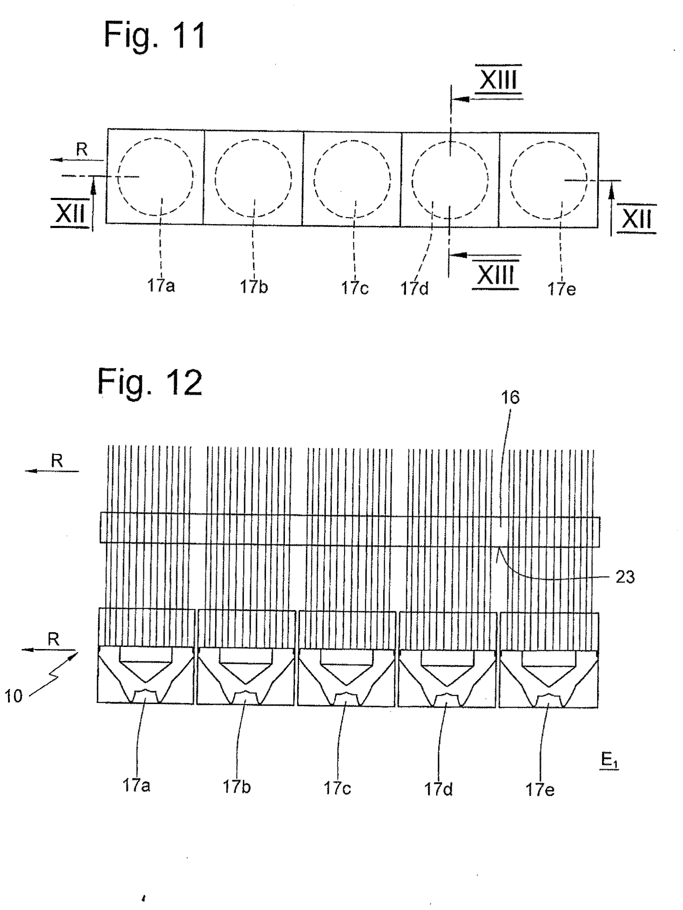

Später wird dann anhand des Ausführungsbeispiels der Fig. 9 und 10 ein weiterer Leuchtentyp, und schließlich anhand der Figuren 11 bis 13 ein dritter Leuchtentyp beschrieben.

Der erste erfindungsgemäße Leuchtentyp gemäß den Figuren 2 bis 8 weist eine Vielzahl von LED's 18 (z. B. 18a, 18b, 18c) auf, die als Primäroptik bezeichnet werden, eine Mehrzahl von Kollimatoroptiken 17, die als Sekundäroptiken bezeichnet werden, sowie eine Tertiäroptik 16 in Form eines plattenförmigen Elementes.

Ausweislich Fig. 2 ist eine erste Kollimatoroptik 17a, eine zweite Kollimatoroptik 17b, und eine dritte Kollimatoroptik 17c dargestellt. Jeweils im Zentrum der Kollimatoroptik 17 befindet sich eine LED 18a, eine LED 18b und eine LED 18c. Der guten Ordnung halber sei darauf hingewiesen, dass es sich bei der LED 18a um eine einzige LED oder um eine Gruppe von LED's handeln kann.

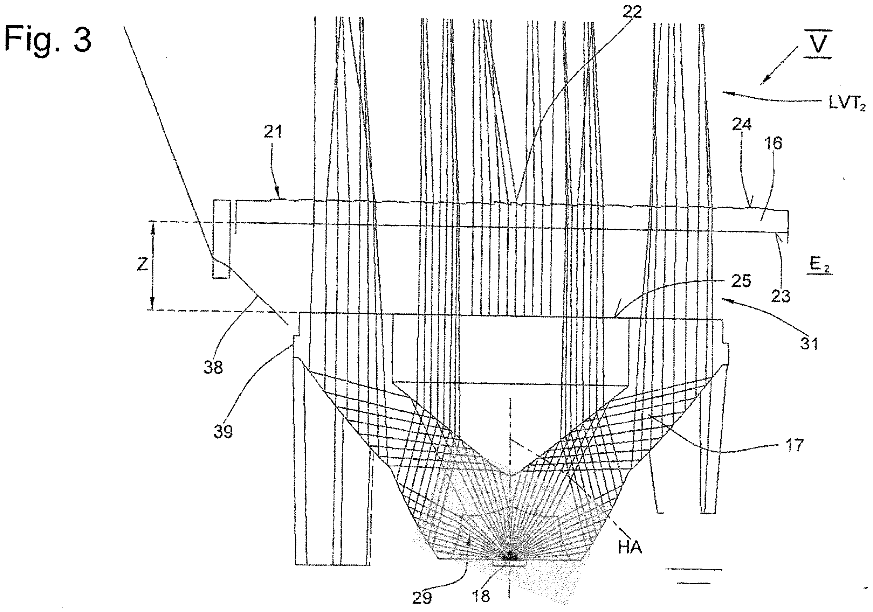

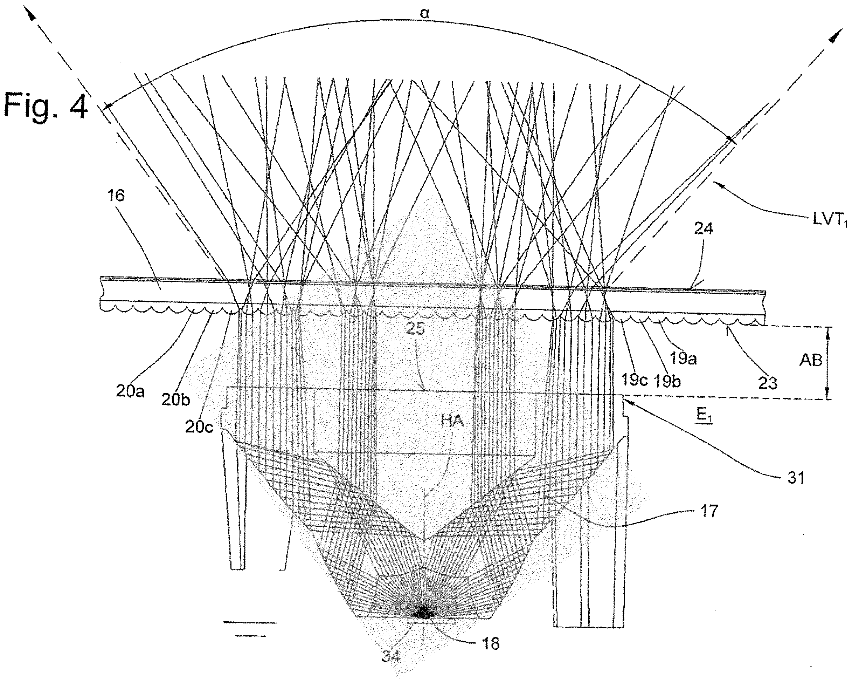

Bei dem Ausführungsbeispiel der Figuren 2 bis 8 ist die Kollimatoroptik 17 jeweils im Wesentlichen rotationssymmetrisch ausgebildet, und weist, wie am besten aus den Figuren 3 und 4 ersichtlich, eine Höhlung 29 auf, die eine Aufnahme für die LED's bereitstellt.

Das von den LED's 18 emittierte Licht wird unter Zuhilfenahme von Totalreflektionsflächen stark gebündelt und verlässt die Kollimatoroptik 17 durch die Lichtaustrittsfläche 25 der Kollimatoroptik 17.

Unter einem Abstand Z von der Lichtaustrittsfläche 25 der Kollimatoroptik 17 beabstandet befindet sich eine Lichteintrittsfläche 23 der Tertiäroptik 16. Die Tertiäroptik 16 ist als im Wesentlichen plattenförmiges, rechteckförmiges Element ausgebildet. Es ist in der Lichtaustrittsöffnung 28 der Leuchte 10 angeordnet. Die Tertiäroptik 16, bzw. deren Lichtaustrittsfläche 24 stellt insoweit die Lichtaustrittsöffnung 28 der Leuchte 10 bereit.

Ausweislich Fig. 2 sind die LED's 18a, 18b, 18c jeweils beabstandet unter einem Abstand A voneinander angeordnet. Der Abstand A stellt insoweit ein Rastermaß bereit.

Die äußeren Abmessungen der Kollimatoroptiken 17a, 17b, 17c sind in Fig. 2 gestrichelt dargestellt. Man erkennt, dass jeweils zwei Kollimatoroptiken (z. B. 17a und 17b) voneinander beabstandet sind. Jeweils zwischen zwei Kollimatoroptiken befindet sich ein Freiraum 30.

Demgegenüber ist bei dem später noch zu erläuternden Ausführungsbeispiel der Figuren 11 bis 13 ein solcher Freiraum 30 nicht vorgesehen.

Ausweislich des Ausführungsbeispiels der Figuren 2 bis 8 soll nun erläutert werden, dass die Leuchte 10 unterschiedliche Lichtverteilungen entlang der beiden zueinander senkrecht stehenden Ebenen E1 und E2 erzeugt.

Als Ebene E1 wird die in Fig. 2 bezeichnete Ebene E1 verstanden, die die Längsrichtung R der Leuchte 10, und insbesondere die Längsmittelachse MA der Leuchte 10 enthält. Es handelt sich um eine Ebene E1, die im Wesentlichen parallel zu der auszuleuchtenden Gebäudefläche 12 angeordnet ist. Die Ebene E1 entspricht der Papierebene der Fig. 4.

Als dazu senkrechte Ebene E2, oder zweite Ebene E2 wird die Ebene E2 bezeichnet, die der Papierebene der Fig. 3 entspricht. Der Normalenvektor dieser Ebene E2 ist von der Längsrichtung R, bzw. von der Längsmittelachse MA bereitgestellt.

An der Tertiäroptik 16 sind ausweislich der Figuren 3 bis 8 Verbreiterungsmittel 19 und Lichtablenkungsmittel 21 angeordnet.

Zunächst sollen die Verbreiterungsmittel 19 anhand der Fig. 4 erläutert werden:
Bei dem Ausführungsbeispiel der Fig. 4 sind auf der Lichteintrittsfläche 23 der Tertiäroptik 16 eine Vielzahl von Lentikularlinsen 20 angeordnet. Diese erstrecken sich entlang der gesamten Breite B der Tertiäroptik 16 quer zur Papierebene der Fig. 4 zylindrisch fort. Das von der Kollimatoroptik 17 emittierte parallele oder im Wesentlichen parallele Lichtstrahlenbündel 31, welches ausweislich der Fig. 4 eine sehr enge Lichtverteilung entlang der Ebene E1 darstellt, trifft auf die Verbreiterungsmittel 19, 20, 20a, 20b, 20c und wird hierdurch verbreitert. Es ergibt sich eine Lichtabstrahlung entlang der Ebene E1 unter einem Winkel α von etwa 80°.

Die zuvor sehr enge, nämlich parallele oder nahezu parallele Lichtverteilung wird also sehr stark aufgespreizt.

Etwas anderes gilt in der dazu parallelen zweiten Ebene E2. Die Lichtverteilung soll ausweislich Fig. 3 erläutert werden.

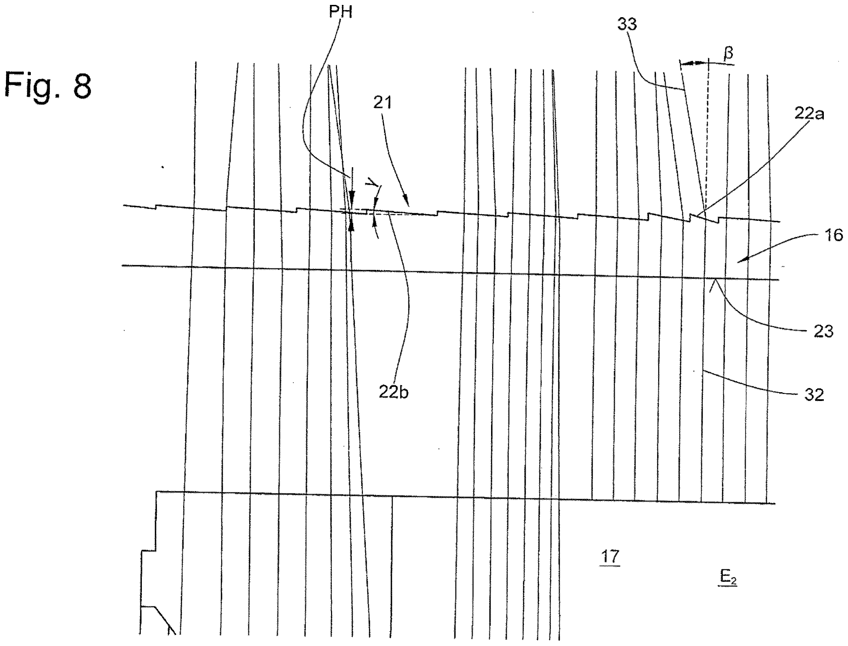

Man erkennt hier, dass das parallele Lichtstrahlenbündel 31, welches entlang der Ebene E2 auf die Lichteintrittsfläche 23 der Tertiäroptik 16 trifft, von der Lichteintrittsfläche 23 nicht beeinflusst wird. Hier findet eine Beeinflussung erst an der Außenseite, bzw. Grenzfläche der Tertiäroptik 16 statt. Hier ist nämlich eine Vielzahl von Prismen 22 vorgesehen, die in Fig. 8 etwas vergrößert dargestellt sind.

Beispielhaft soll anhand des Prismas 22a erläutert werden, dass der schematisch dargestellte Lichtstrahl 32, der von der Kollimatoroptik 17 stammt, und die Lichteintrittsfläche 23 der Tertiäroptik 16 ohne Brechung passiert, beim Auftreffen auf das Prisma 22a um einen Winkel β abgelenkt wird. Hieraus resultiert ein Lichtstrahl 33.

Eine Lichtverbreiterung findet entlang der Ebene E2 aber nicht statt. Hier findet nur eine Ablenkung statt. Aus diesem Grunde werden die Prismen 22 als Ablenkungsmittel 21 im Sinne der vorliegenden Patentanmeldung bezeichnet.

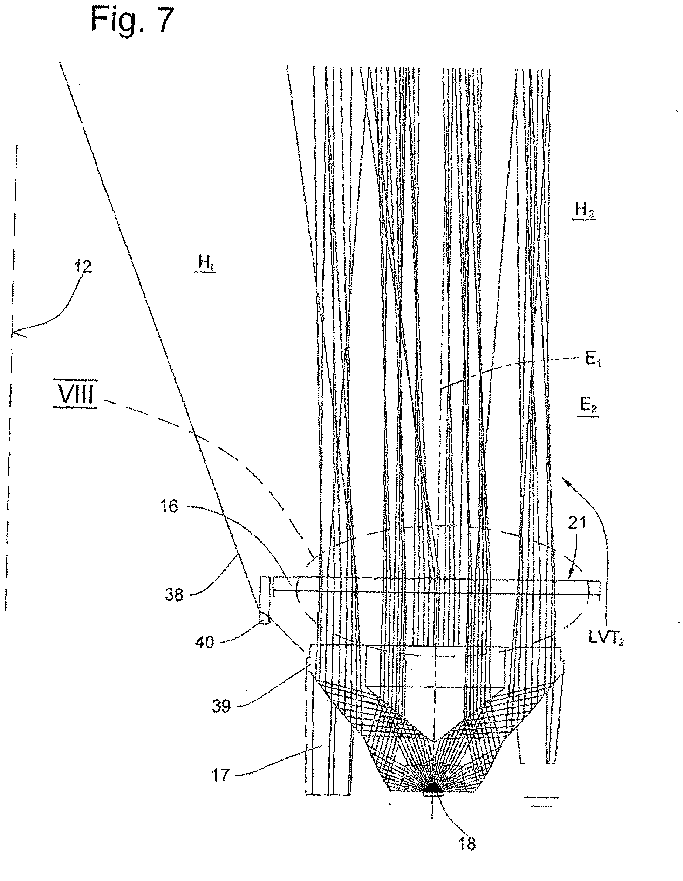

Ausweislich Fig. 7 soll erläutert werden, dass als Ebene E1 insbesondere die Ebene verstanden wird, die als Längsmittelebene durch die Leuchte 10 verläuft, und die die Längsrichtung R bzw. die Längsmittelachse MA enthält.

Die Ebene E1 definiert zwei Halbräume, nämlich einen ersten Halbraum H1 und einen zweiten Halbraum H2. Der erste Halbraum H1 ist der in Fig. 7 lediglich schematisch angedeuteten Gebäudefläche 12 zugewandt. Der Halbraum H2 ist dieser Gebäudefläche 12 abgewandt.

Durch die Anordnung von Prismen 22 unter Berücksichtigung individueller Anstellwinkel γ und unterschiedlicher Höhen PH eines Prismas 22b (vgl. Fig. 8), sowie auf Grund dessen axialer Erstreckung (d. h. der Erstreckung quer zur Papierebene der Fig. 8) und der Positionierung auf der Lichtaustrittsfläche 24 der Tertiäroptik 16 kann eine entsprechende Lichtablenkung und Homogenisierung stattfinden.

Durch die Anordnung von Verbreiterungsmitteln 19 und Lichtablenkungsmitteln 21 kann auf der Gebäudefläche 12 eine Lichtverteilung erreicht werden, die die Gebäudefläche 12 entlang der gesamten Gebäudeflächenhöhe WH und entlang der gesamten Länge der Gebäudefläche 12 homogen ausleuchtet.

Dabei kann - insbesondere unter Bezugnahme auf Fig. 1 - entlang der Ebene E2 eine sehr enge Lichtverteilung unter einem Abstrahlwinkel δ von weniger als 10° erreicht werden, die ausschließlich in einen Halbraum H1 hinein gelenkt wird. Entlang der Ebene E1 kann zugleich eine sehr breite oder jedenfalls deutlich breitere Lichtverteilung erreicht werden, wobei die Übergänge zwischen einzelnen, voneinander beabstandeten Kollimatoroptiken oder voneinander beabstandeten LED's oder Gruppen von LED's homogenisiert werden.

Das in den Figuren nicht dargestellte Leuchtengehäuse kann sehr kompakt gehalten werden, und beispielsweise, wie in Fig. 1 angedeutet, im Wesentlichen kastenförmig ausgebildet sein.

Die LED's werden auf einer in Fig. 4 lediglich schematisch angedeuteten Platine 34 angeordnet, die fest, relativ zu einem Boden des Gehäuses 35 angeordnet ist.

Das Gehäuse der Leuchte 10 ist in Fig. 1 mit 35 bezeichnet.

Bei der erfindungsmäßen Leuchte 10 kann der überwiegende Anteil des von der Leuchte 10 emittierten Lichtstroms in den Halbraum H1 hineingelenkt werden, und insoweit effizient zur Ausleuchtung der Wandfläche 12 genutzt werden.

Auf Basis der in den Ausführungsbeispielen beschriebenen Geometrie ist es möglich, dass etwa bis zu 80 % des gesamten Lichtstromes in den Halbraum H1 hineingelenkt werden. In den Halbraum H2 gelangen gegenüber deutlich geringere Lichtanteile von vorzugsweise maximal etwa 20 % des gesamten Lichtstroms.

Von der Erfindung sind allerdings auch solche Leuchtentypen umfasst, bei denen ein nur geringerer Anteil des Lichtstroms in den Halbraum H1 hineingelenkt wird.

Erfindungsgemäß soll der überwiegende Anteil des Gesamt-Lichtstroms, also insbesondere mehr als 55 %, vorzugsweise mehr als 60 %, weiter vorzugsweise mehr als 70 % des gesamten Lichtstroms in den Halbraum H1 hinein geleitet oder gelenkt werden, um dort zur Ausleuchtung der Gebäudefläche 12 verwendet werden zu können.

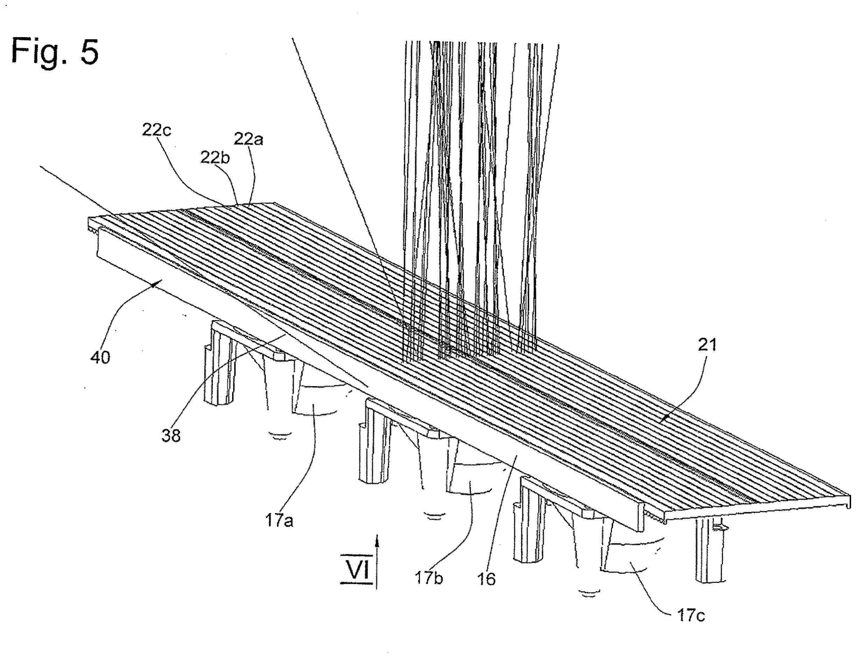

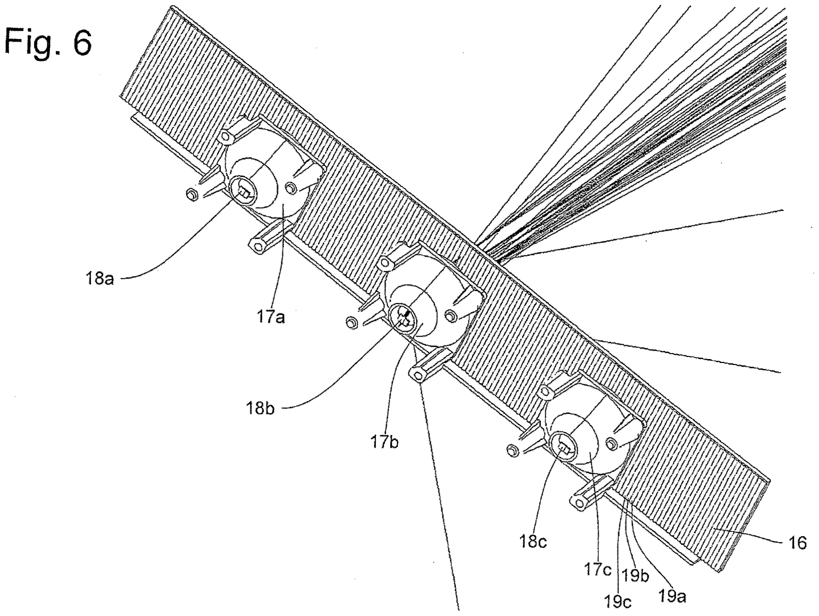

Ausweislich der Figuren 5 und 6 ist erkennbar, dass mehrere Kollimatoroptiken 17a, 17b, 17c von einer plattenförmigen Tertiäroptik 16 gemeinsam übergriffen sein können. Dies ermöglicht eine besonders vorteilhafte optische Gestaltung der Leuchte.

Insbesondere kann auf dieser Weise die Tertiäroptik 16 durchgehend ausgebildet sein, was einen entsprechend einheitlichen Gesamteindruck der Leuchte ermöglicht.

Bei dem Ausführungsbeispiel der Figur 5 ist angedeutet, dass sich die einzelnen Prismen 22a, 22b, 22c usw. über die gesamte axiale Länge der Tertiäroptik 16 erstrecken. Bei anderen Ausführungsbeispielen kann die axiale Länge der einzelnen Prismen 22 aber auch kürzer getroffen sein.

Ausweislich des in Figur 3 des mit 38 bezeichneten Streu-Lichtstrahls soll verdeutlicht werden, dass auch unmittelbar benachbart der Leuchte 10 angeordnete Abschnitte der Gebäudefläche 12 mit Streu-Licht beleuchtet werden können. Hierfür werden vorzugsweise Randstahlen verwendet, die die Kollimatoroptik 17 im Bereich 39 ihres äußeren Randes verlassen.

An der Tertiäroptik 16 kann zu diesem Zwecke ein lichtdurchlässiges Fensterelement 40, wie in Figur 5 ersichtlich, angeordnet sein.

Ausweislich des Ausführungsbeispiels der Figuren 9 und 10 ist bei einem weiteren Ausführungsbeispiel der Erfindung vorgesehen, dass die Tertiäroptik 16 von einer ersten Platte 26 und einer zweiten Platte 27 bereitgestellt sind. Diese können voneinander auch unter einem Abstand U voneinander beabstandet sein.

Wie aus der Zusammenschau der Figuren 9 und 10 deutlich, ist vorgesehen, dass die erste Platte 26 an ihrer Lichteintrittsseite Verbreiterungsmittel 19 bereitstellt, und die zweite Platte 27 auf ihrer Ausgangsseite Lichtablenkungsmittel 21 bereitstellt. Diese können identisch ausgebildet sein zu den Verbreiterungsmitteln und Lichtablenkungsmitteln des ersten Ausführungsbeispiels. Bei dem Ausführungsbeispiel der Fig. 9 sind die Ausgangsseite 36 der ersten Platte 26 und die Eingangsseite 37 der zweiten Platte 27 im Wesentlichen glatt ausgebildet, und insoweit ohne lichttechnische Funktion.

Mit dem Ausführungsbeispiel der Figuren 9 und 10 kann aber die gleiche Lichtverteilung entlang der Ebenen E1 und E2 erreicht werden, wie bei dem ersten Ausführungsbeispiel.

Das dritte Ausführungsbeispiel gemäß den Figuren 11 bis 13 zeichnet sich dadurch aus, dass zwischen jeweils zwei benachbarten Kollimatoroptiken 17a und 17b, kein Freiraum angeordnet ist, sondern sich die beiden Kollimatoroptiken unmittelbar einander benachbart gegenüberliegen. Bei diesem Ausführungsbeispiel kann auf Verbreiterungsmittel 19 an der Tertiäroptik 16, wie dies Fig. 12 deutlich macht, verzichtet werden. Hier wird eine homogene, gleichmäßige Ausleuchtung der Gebäudefläche entlang der gesamten Längsrichtung R der Leuchte 10, bzw. entlang der Längsrichtung der gesamten Gebäudefläche 12 erreicht, ohne dass es der Verbreiterungsmittel bedarf.

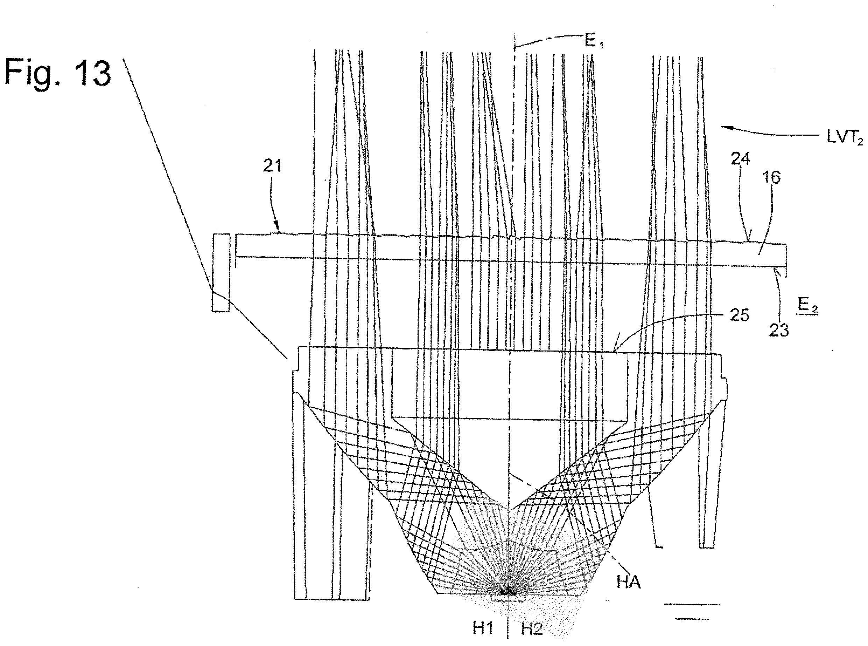

Wie auch bei den beiden vorherigen Ausführungsbeispielen kann auch hier eine Lichtablenkung unter Zuhilfenahme der Lichtablenkungsmittel 21 (vgl. Figur 13) in nur einen der beiden Halbräume erfolgen, und zwar in denjenigen Halbraum H1, der der auszuleuchtenden Gebäudefläche 12 benachbart ist.

## Patentansprüche

1. Kombination einer Gebäudefläche (12), die als hohe, vertikale Wand eines Gebäuderaumes ausgebildet ist, mit einer Leuchte (10) zur Ausleuchtung der Gebäudefläche (12), wobei die Leuchte in Längsrichtung (R) langgestreckt ausgebildet ist, und entlang einer ersten, die Längsrichtung beinhaltenden Ebene (E1) eine erste Lichtverteilung (LVT1) und entlang einer zweiten Ebene (E2), deren Normalenvektor von der Längsrichtung (R) bereitgestellt ist, eine zweite Lichtverteilung (LVT2) generiert, wobei die Leuchte mehrere LED's (18a, 18b, 18c) als Primäroptik umfasst, denen jeweils eine Kollimatoroptik (17a, 17b, 17c) als Sekundäroptik zugeordnet ist, von der Licht entlang einer Hauptachse (HA) mit einer entlang der ersten Ebene (E1) und entlang der zweiten Ebene (E2) jeweils sehr engen Lichtverteilung einer Tertiäroptik (16) zugeführt wird, wobei die Tertiäroptik Verbreiterungsmittel (19) aufweist, mittels der eine Verbreiterung der Lichtverteilung entlang der ersten Ebene (E1) erfolgt, und Lichtablenkungsmittel (21), mittels der unter Beibehaltung einer engen oder im wesentlichen engen Lichtverteilung entlang der zweiten Ebene (E2) überwiegende Anteile des gesamten Lichtstromes in einen von der ersten Ebene (E1) begrenzten Halbraum (H1) gelenkt werden, wobei die Lichtablenkungsmittel von sich in Längsrichtung erstreckenden Prismen bereitgestellt sind, und wobei die Lichtverbreiterungsmittel (19) von Lentikular-Linsen (20) gebildet sind, die entlang einer Richtung quer zur Längsrichtung (R) langgestreckt ausgebildet sind.

2. Kombination nach Anspruch 1, **dadurch gekennzeichnet, dass** die Lichtablenkungsmittel (21) einer Lichtvergleichmäßigung im Sinne einer Homogenisierung der Lichtverteilung entlang eines Lichtabstrahlungswinkels entlang der zweiten Ebene (E2) dienen.

3. Kombination nach einem der vorangegangenen Ansprüche, **dadurch gekennzeichnet, dass** das Licht von der Sekundäroptik (17) im Wesentlichen als paralleles Lichtstrahlenbündel auf die Tertiäroptik (16) trifft.

4. Kombination nach einem der vorangegangenen Ansprüche, **dadurch gekennzeichnet, dass** eine Lichteintrittsfläche (23) der Tertiäroptik (16) von einer Lichtaustrittsfläche (25) der Sekundäroptik (17) beabstandet angeordnet ist.

5. Kombination nach einem der vorangegangenen Ansprüche, **dadurch gekennzeichnet, dass** die Sekundäroptik (17) eine um ihre Mittelachse (HA) im Wesentlichen rotationssymmetrische Lichtverteilung em ittiert.

6. Kombination nach Anspruch 1, **dadurch gekennzeichnet, dass** die Verbreiterungsmittel (19) an der einen Seite der Tertiäroptik (16), insbesondere an deren Lichteintrittsfläche (23), und die Lichtablenkungsmittel (21) an der anderen Seite der Tertiäroptik, insbesondere an der Lichtaustrittsfläche (25) der Tertiäroptik, angeordnet, und insbesondere als Mikrostrukturen ausgebildet, sind.

7. Kombination nach einem der vorangegangenen Ansprüche, **dadurch gekennzeichnet, dass** die Tertiäroptik (16) von einem flächigen, insbesondere flachen, weiter insbesondere plattenförmigen, Element gebildet ist.

8. Kombination nach Anspruch 1, **dadurch gekennzeichnet, dass** die Lichtverbreiterungsmittel an der Lichteintrittsfläche und die Lichtablenkungsmittel an der Lichtaustrittsfläche der Tertiäroptik ausgebildet sind, oder dass eine demgegenüber geometrisch inverse Anordnung getroffen ist.

9. Kombination nach Anspruch 1, **dadurch gekennzeichnet, dass** die Tertiäroptik von zwei oder mehreren flächigen, insbesondere flachen, weiter insbesondere plattenförmigen, Elementen gebildet ist.

10. Kombination nach Anspruch 9, **dadurch gekennzeichnet, dass** die Lichtverbreiterungsmittel und die Lichtablenkungsmittel als Mikrostrukturen an der Lichteintrittsfläche bzw. an der Lichtaustrittsfläche unterschiedlicher Elemente ausgebildet sind.

11. Kombination nach Anspruch 1, **dadurch gekennzeichnet, dass** die Lichtverbreiterungsmittel an einer der Seiten der Tertiäroptik und die Lichtablenkungsmittel an derselben Seite der Tertiäroptik angeordnet, und insbesondere als Mikrostrukturen, ausgebildet sind.

12. Kombination nach Anspruch 1, **dadurch gekennzeichnet, dass** die Grenzfläche einer Lentikular-Linse (20) von einer Teilfläche eines Kreiszylinders bereitgestellt ist.

13. Kombination nach einem der vorangegangenen Ansprüche, **dadurch gekennzeichnet, dass** unterschiedliche Prismen (22) unterschiedliche Anstellwinkel (γ) aufweisen und / oder dass die Prismen in ihrer Breite und/oder in ihrer Höhe (PH) variieren.

## Claims

1. Combination of a building surface (12) which is formed as a high, vertical wall of a room of a building, having a lamp (10) for illuminating the building surface (12), wherein the lamp is elongated in the longitudinal direction (R), and generates a first light distribution (LVT1) along a first plane (E1) comprising the longitudinal direction, and a second light distribution (LVT2) along a second plane (E2), the normal vector of which is provided by the longitudinal direction (R), wherein the lamp comprises multiples LEDs (18a, 18b, 18c) as primary optics, to each of which collimating optics (17a, 17b, 17c) is assigned as secondary optics, by which light is guided along a main axis (HA) having in each case a very narrow light distribution of a tertiary optics (16), along the first plane (E1) and along the second plane (E2), wherein the tertiary optics has diffusing means (19), by means of which light distribution is diffused along the first plane (E1), and light deflecting means (21), by means of which predominant shares of the entire light flow are directed into a half-space (H1) bordered by the first plane (E1), while maintaining a narrow or substantially narrow light distribution along the second plane (E2), wherein the light deflecting means are prisms extending therefrom in the longitudinal direction, and wherein the light diffusing means (19) are formed by lenticular lenses (20) which are formed elongated along a direction transverse to the longitudinal direction (R).

2. Combination according to claim 1, **characterised in that** the light deflecting means (21) provides light equalisation in the sense of homogenisation of the light distribution along a light radiation angle along the second plane (E2).

3. Combination according to one of the preceding claims, **characterised in that** the light from the secondary optics (17) substantially hits the tertiary optics (16) as a parallel bundle of light rays.

4. Combination according to one of the preceding claims, **characterised in that** a light entry surface (23) of the tertiary optics (16) is arranged spaced apart from a light-emitting surface (25) of the secondary optics (17).

5. Combination according to one of the preceding claims, **characterised in that** the secondary optics (17) emits a substantially rotationally symmetrical light distribution around its central axis (HA).

6. Combination according to claim 1, **characterised in that** the diffusing means (19) is arranged on the one side of the tertiary optics (16), in particular on the light entry surface (23) thereof, and the light deflecting means (21) is arranged on the other side of the tertiary optics, in particular on the light-emitting surface (25) of the tertiary optics, and in particular are formed as a micro-structures.

7. Combination according to one of the preceding claims, **characterised in that** the tertiary optics (16) is formed by a planar, in particular flat, more particularly plate-shaped, element.

8. Combination according to claim 1, **characterised in that** the light diffusing means is formed on the light entry surface and the light deflecting means is formed on the light-emitting surface of the tertiary optics, or a conversely geometrically inverse arrangement is made.

9. Combination according to claim 1, **characterised in that** the tertiary optics is formed by two or more planar, in particular flat, more particularly plate-shaped, elements.

10. Combination according to claim 9, **characterised in that** the light diffusing means, and the light deflecting means are formed as micro-structures on the light entry surface or on the light-emitting surface of different elements.

11. Combination according to claim 1, **characterised in that** the light diffusing means is arranged on one of the sides of the tertiary optics and the light deflecting means is arranged on the same side of the tertiary optics, and in particular are formed as micro-structures.

12. Combination according to claim 1, **characterised in that** the boundary surface of a lenticular lens (20) is provided by a partial area of a circular cylinder.

13. Combination according to one of the preceding claims, **characterised in that** different prisms (22) have different angles of incidence (γ) and/or the prisms vary in their width and/or in their height (PH).

## Revendications

1. Combinaison d'une surface de bâtiment (12), qui est configurée comme une haute paroi verticale d'une pièce de bâtiment, avec une lampe (10) pour éclairer la surface de bâtiment (12), laquelle lampe est allongée dans une direction longitudinale (R) et génère une première distribution de lumière (LVT1) le long d'un premier plan (E1) contenant la direction longitudinale et une deuxième distribution de lumière (LVT2) le long d'un deuxième plan (E2) dont le vecteur normal est fourni par la direction longitudinale (R) et laquelle lampe comprend en guise d'optique primaire plusieurs LED (18a, 18b, 18c) à chacune desquelles est associée en guise d'optique secondaire une optique à collimateur (17a, 17b, 17c) par laquelle de la lumière est fournie le long d'un axe principal (HA) avec une distribution de lumière très étroite le long du premier plan (E1) et le long du deuxième plan (E2) à une optique tertiaire (16), laquelle optique tertiaire comporte des moyens d'élargissement (19) au moyen desquels un élargissement de la distribution de lumière a lieu le long du premier plan (E1) et des moyens de déviation de lumière (21) au moyen desquels la majeure partie du faisceau lumineux total - à l'exception d'une distribution de lumière étroite ou relativement étroite le long du deuxième plan (E2) - est déviée dans un demi-espace (H1) délimité par le premier plan (E1), lesquels moyens de déviation de lumière sont produits par des prismes s'étendant dans la direction longitudinale et lesquels moyens d'élargissement de lumière (19) sont formés par des lentilles lenticulaires (20) qui sont allongées le long d'une direction perpendiculaire à la direction longitudinale (R).

2. Combinaison selon la revendication 1, **caractérisée en ce que** les moyens de déviation de lumière (21) servent à uniformiser la lumière au sens d'une homogénéisation de la distribution de lumière le long d'un angle d'émission de lumière le long du deuxième plan (E2).

3. Combinaison selon une des revendications précédentes, **caractérisée en ce que** la lumière de l'optique secondaire (17) frappe l'optique tertiaire (16) sensiblement comme un faisceau de lumière parallèle.

4. Combinaison selon une des revendications précédentes, **caractérisée en ce qu'**une surface d'entrée de lumière (23) de l'optique tertiaire (16) est disposée à distance d'une surface de sortie de lumière (25) de l'optique secondaire (17).

5. Combinaison selon une des revendications précédentes, **caractérisée en ce que** l'optique secondaire (17) émet une distribution de lumière sensiblement symétrique en rotation autour de son axe central (HA).

6. Combinaison selon une des revendications précédentes, **caractérisée en ce que** les moyens d'élargissement (19) sont disposés sur un côté de l'optique tertiaire (16), en particulier sur sa surface d'entrée de lumière (23), et les moyens de déviation de lumière (21) sur l'autre côté de l'optique tertiaire, en particulier sur la surface de sortie de lumière (25) de l'optique tertiaire, et en particulier configurés comme des microstructures.

7. Combinaison selon une des revendications précédentes, **caractérisée en ce que** l'optique tertiaire (16) est formée par un élément plan, en particulier plat, et plus particulièrement en forme de plaque.

8. Combinaison selon la revendication 1, **caractérisée en ce que** les moyens d'élargissement sont disposés sur la surface d'entrée de lumière et les moyens de déviation de lumière sur la surface de sortie de lumière de l'optique tertiaire, ou qu'une disposition géométriquement inverse à celle-ci est adoptée.

9. Combinaison selon la revendication 1, **caractérisée en ce que** l'optique tertiaire est formée par deux ou plusieurs éléments plans, en particulier plats, et plus particulièrement en forme de plaques.

10. Combinaison selon la revendication 9, **caractérisée en ce que** les moyens d'élargissement de lumière et les moyens de déviation de lumière sont configurés comme des microstructures sur la surface d'entrée de lumière et la surface de sortie de lumière de différents éléments.

11. Combinaison selon la revendication 1, **caractérisée en ce que** les moyens d'élargissement de lumière sont configurés sur un des côtés de l'optique tertiaire et les moyens de déviation de lumière sur le même côté de l'optique tertiaire, et en particulier comme des microstructures.

12. Combinaison selon la revendication 1, **caractérisée en ce que** la surface limitrophe d'une lentille lenticulaire (12) est constituée par une surface partielle d'un cylindre circulaire.

13. Combinaison selon une des revendications précédentes, **caractérisée en ce que** différents prismes (22) présentent différents angles d'attaque (y) et/ou que les prismes varient en largeur et/ou en hauteur (PH).
